# EUROPEAN PATENT SPECIFICATION

(11) **EP 2 248 409 B1**
(45) Date of publication and mention of the grant of the patent: **28.11.2012**
(21) Application number: 09425175.8
(22) Date of filing: 07.05.2009
(51) Int. Cl.: A01D 34/74, A01D 34/54

(54) **Cutting height adjusting system for lawnmower**
Schnitthöheneinstellsystem für einen Rasenmäher
Système de réglage de la hauteur de coupe pour tondeuse à gazon

(43) Date of publication of application: 10.11.2010
(73) Proprietor: MA.RI.NA Systems S.r.l., 24034 Cisano Bergamasco (IT)
(72) Inventor: Raimondi, Marco, 24034 Cisano Bergamasco (IT)
(74) Representative: Riccardi, Sergio

(56) References cited:
- EP-A- 1 817 953
- DE-A1- 10 209 717
- US-A- 4 321 784
- US-A1- 2007 169 456
- US-B1- 7 013 626

## Description

The present invention relates to a cutting height adjusting system for lawnmower.

The lawnmowers currently available on the market provide several systems for adjusting the cutting height, that is for adjusting the distance of the lawn cutting blades in respect of the ground. The aforesaid systems are different from one another mainly because of adjusting accuracy and comfort the operator can carry out the aforesaid adjusting operation by. The solutions provided in more accurate systems are rightly expected to correspond to higher manufacturing costs due to both higher quality level of the members involved and higher technical complexity of the arrangement adopted for said members. Therefore, if on one hand the more expensive solutions make the cutting height adjustment easier by, for example, the shifting of a single lever also having an easy access and connected to complex linkage systems raising the lawnmower frame, on the other hand the cheaper systems allow for opportunities of less accurate and complex adjustments to be executed both in regard of the position and the number of levers to be shifted in order to reach the desired height of the cutting blades in respect of the ground.

Moreover the opportunity of adopting the aforesaid systems depends on the lawnmower type, in other words each adjusting system is suitably manufactured in order to suit the frame structure and the cutting blade unit of the particular lawnmower considered.

US 4,321,784 A at Wood William D et al discloses a lawn mower moveably supported by wheels eccentrically mounted on front and rear link members which are respectively joined together in pairs by through axles. Two flexible cables transmit this rotation from one front link member to one rear link member. One of the link members is coupled by a flexible cable to a selectively operable control for effecting manual rotation of all of the link members thus effecting a change in the height of the wheels relative to housing simultaneously. Said selectively operable control only allows a predefined number of positions of the associated levers which results in a limited selection cutting heights by the operator. The cutting height adjusting system, conversely, by the worm screw allows for continuously adjusting cutting blade unit height in a determined range.

US 2007/169456 A1 at Komorida Takeshi et al discloses a riding type mower comprising: a plurality of wheels including at least one driven wheel; a vehicle body supported by the plurality of wheels; a driver's seat supported by the vehicle body; a mower unit located below the vehicle body; a suspension mechanism for vertically movably supporting the mower unit from the vehicle body, the suspension mechanism having a restraint member operatively connected to the suspension mechanism; an operation mechanism for operating the suspension mechanism; a stopper for setting a lower limit for a vertical position of the mower unit to define a cutting height by abutment against the restraint member, the stopper is adapted to be rotated to change the lower limit; a lower limit adjustment element located laterally of the driver's seat and rotatable to rotate the stopper; and a linking mechanism for operatively connecting the lower limit adjustment element with the stopper.

US 7,013,626 B1 at Strope Claude discloses a deck height adjustment apparatus for a walk-behind mower including a foot pedal actuated lever operably connected to a deck lift mechanism for raising and lowering a mowing deck. A cam wheel, having an outer edge of a varying radius relative to an axis of rotation, is mounted to a mower body proximate the lever. The deck height is a function of the radius of the outer edge of the cam wheel in contact with the lever. An adjustment mechanism for setting the deck height is conveniently located on a handle of the walk-behind mower.

Further difference of the adjusting cutting height of lawnmowers between several currently known systems and the system according to the present invention is given by the fact that within said known systems the adjusting occurs in a discrete manner - typically along 4 to 7 different values - whilst in the system of the present invention it is allowed to chose any value measurable in millimetres - typically in a range from 20 mm to 70 mm - comprised between the maximum and the minimum height provided for the blade unit.

This particular feature is not marginal at all, but instead it is extremely useful, for example, in trimming the lawn within areas contiguous to lawns just trimmed up to a given height: in this case the measurable in millimetres adjusting of the system of the present invention allows for setting a cutting height exactly equal to the height of the contiguous areas thus avoiding to generates on the whole lawn steps anaesthetic and, sometimes, dangerous as in sport fields (golf, cricket, soccer etc.).

Object of the present invention is therefore to provide a cutting height adjusting system for lawnmowers cheap but having high accuracy characteristics.

Further object of the present invention is, moreover, to provide a cutting height adjusting system for lawnmowers applicable on any lawnmower, either it has the cutting blade unit integral with the frame of the same lawnmower or said unit is movable in respect of said frame.

A detailed description of a preferred embodiment of the cutting height adjusting system for lawnmowers according to the present invention will be provided with reference to the annexed drawings, wherein:

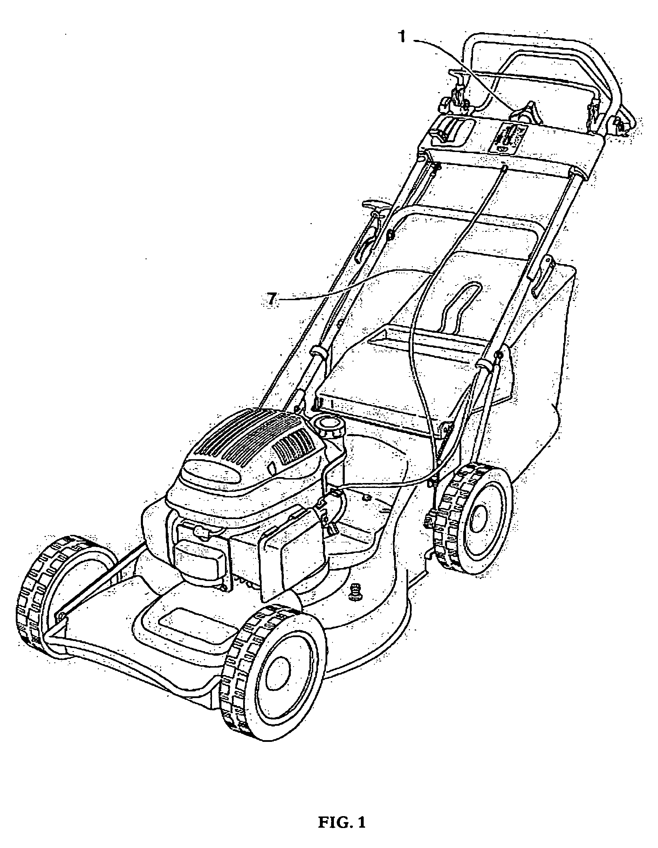

fig. 1 is a perspective view of a lawnmower provided with the cutting height adjusting system according to a preferred embodiment of the present invention,
fig. 2 is a perspective view of an enlarged detail of fig. 1,
fig. 3 is a perspective view of the raising system of the cutting blade unit of the lawnmower in fig. 1,

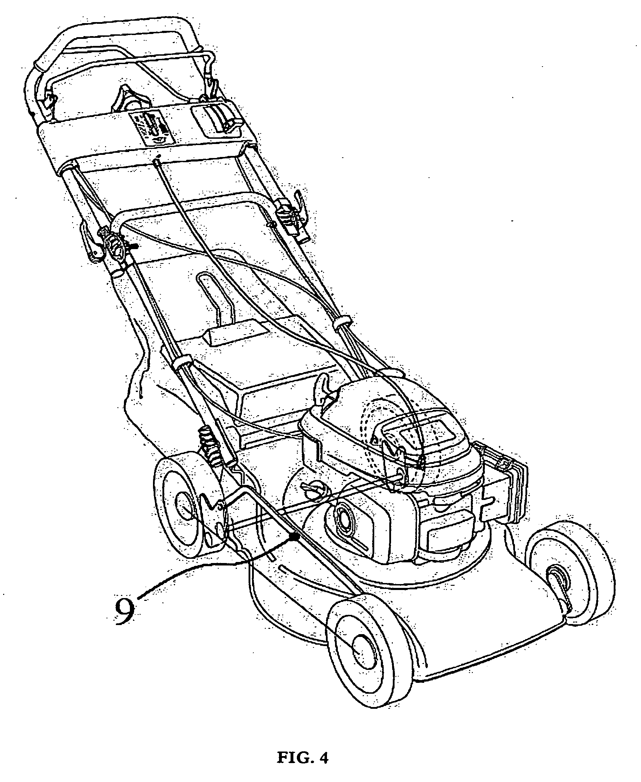

fig. 4 is a perspective view showing the members linking two axles of the lawnmower in fig. 1, and
fig. 5 is a perspective view of the mechanical drive of the system of the present invention.

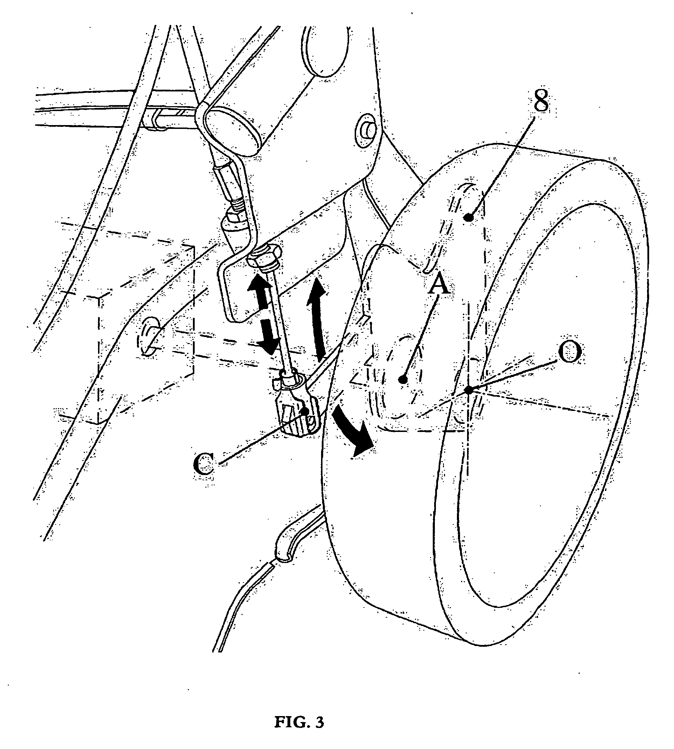

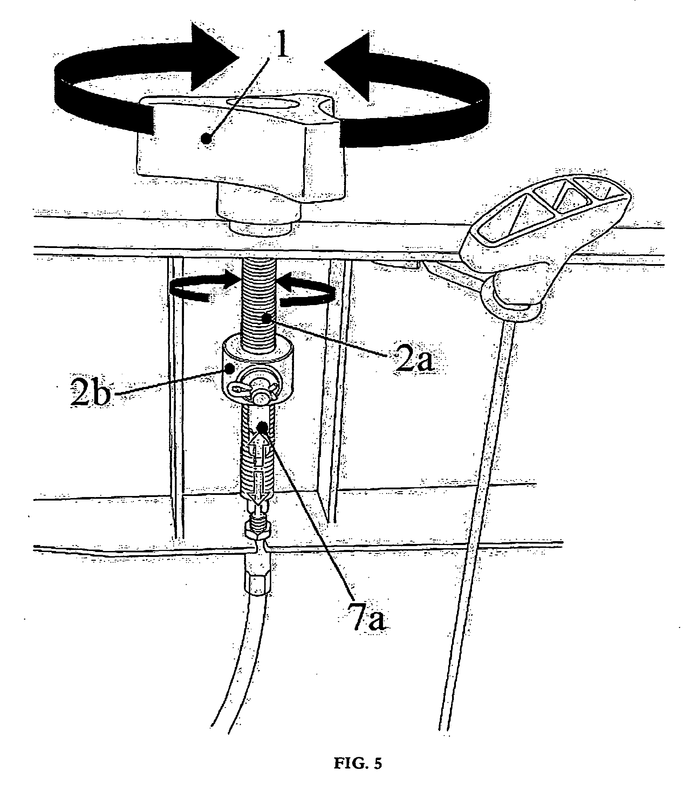

Referring now to the annexed drawings, there is shown (fig. 5) a lawnmower having, at a position easily accessible for an operator even with the lawnmower moving, a knob 1 keyed in a stable manner on a worn screw 2a, in turn, coupled to a lead screw nut 2b. Therefore a rotation of said knob 1 actuates said lead screw nut 2b, thus causing it to translate along the longitudinal axis of said worn screw 2a. On said lead screw nut 2b there is mounted, fixedly or in a removable manner, a pin 7a adapted to receive one end of a cable 7, typically in metallic material, whilst the other end of said cable 7 is engaged in an eccentric member 8. Said eccentric member 8 provides a pair of through holes at points A and O, illustrated in fig. 3, for passing of the coupling pins of the rear axle to the frame of said lawnmower and of the wheel to said axle, respectively. Finally, said eccentric member 8 provides, at the point C in fig. 3, a mount for the second end of said cable 7. Therefore a rotation of the knob 1 leading the lead screw nut 2b to a translation in a proximal direction produces a strain within the cable 7, considerable inextensible in the range of the expected strains, fully and directly transmitted to said mount at the point C, which will see its own height raising in respect of the ground, and the point A as well which, being integral with the frame, will raise the latter in respect of the ground. In order to assure an unchanging horizontal trim of the lawnmower the front axle will be linked to the rear axle by a conventional articulated quadrilateral 9. Consequently even the cutting blade unit will be raised for an equal height in respect of the frame of the lawnmower, since it is integral therewith.

Alternatively the cutting height adjusting system may be equally applicable even to lawnmowers the cutting blade unit of which is not rigidly constrained in respect of the same lawnmower frame but it can be movable in respect of the latter: in this case obviously the described arrangement has to be modified by causing the eccentric member 8 and the cutting blade unit to be hinged at the point A.

The just described preferred embodiment according to the present invention could be defined by several dimensions of the centre distance OA so as to obtain several ranges for adjusting the cutting height depending on the requirements the particular lawnmower, on which the system is installed, has to meet.

Further embodiments can provide other types of mechanical drive in place of said worn screw - lead screw nut, eventually with no manual control but, for example, with electric/electronic control.

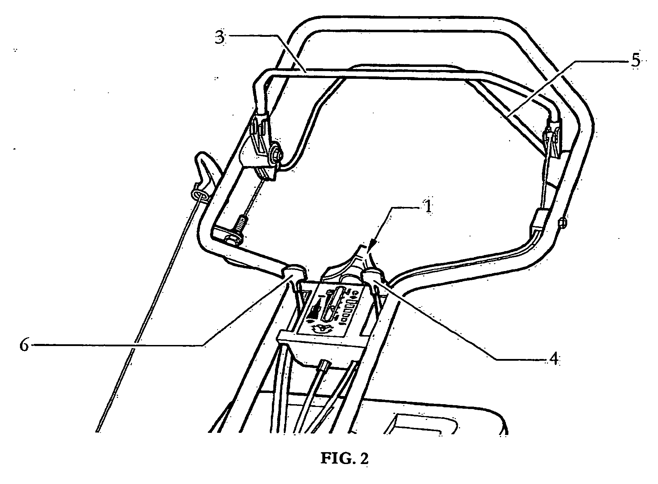

It is now possible to notice how the description provides a solution for the technical problem initially placed by providing an economically feasible adjusting system due to the use of cheap mechanical members such as a steel cable, a well-known system like worn screw - lead screw nut and an eccentric member. Further, the description provides a system able to assure high accuracy by the adoption of a worn screw coupled with a lead screw nut the performances of which are well known to those skilled in the art, for which reason they will not shown herein. Moreover, the adjusting system of the present invention is actuable by the operator at any time, also with the lawnmower moving, with no need of expensive device for decoupling the drive motion from the cutting blade unit, given also the noticeable ease for accessing said knob 1, which in the shown embodiment (see fig. 2) is next to the safety lever 3, the accelerator lever 4, the self-movement actuation lever 5 and the speed selector lever 6.

## Claims

1. A cutting height adjusting system for a cutting blade unit of walk-behind lawnmowers comprising:
(i) an eccentric member (8) provided with a pair of through holes (O, A), a first hole of said pair being arranged for receiving a corresponding lawnmower wheel axle and a second hole of said pair being arranged for receiving an axle connected to the lawnmower frame,
(ii) a mount pivotally connected to said eccentric member (8),
(iii) a cable (7) connected at a first end thereof with said mount,
**characterized by** the fact that the second end of said cable (7) is fixed to a mechanical drive constituted by a lead screw nut (2b) translating in respect of a worm screw (2a).

2. The cutting height adjusting system according to claim 1, wherein a knob (1) is fixed to one end of said worm screw (2a) for manually controlling rotation thereof.

3. The cutting height adjusting system according to claim 1, wherein said cable (7) is formed with metallic material, preferably steel, being inextensible under tensile stress within the expected stress range.

## Patentansprüche

1. Schnitthöheneinstellsystem für eine Schnittklingeneinheit für einen handbedienten Rasenmäher enthaltend:
(i) ein ein Paar Durchgangslöcher (O, A) aufweisendes Kurvenelement (8), wobei das erste Paarloch für die Aufnahme einer entsprechenden Radachse des Rasenmähers und das zweite Paarloch für die Aufnahme einer mit dem Gestell des Rasenmähers verbundenen Achse geeignet sind,
(ii) einen mit dem Kurvenelement (8) drehbar verbundenen Einsatz,
(iii) ein an seinem ersten Ende mit dem besagten Einsatz verbundenes Kabel (7), **dadurch gekennzeichnet, dass** das zweite Ende des Kabels (7) an einen mechanischen Antrieb, der aus einer gegenüber einer Schnecke (2a) bewegten Leitspindelmutter (2b) besteht, befestigt wird.

2. Schnitthöheneinstellsystem nach Anspruch 1, worin ein Drehknopf (1) an ein Ende der besagten Schnecke (2a) befestigt wird, um ihre Drehung zu regeln.

3. Schnitthöheneinstellsystem nach Anspruch 1, worin das Kabel (7) aus einem metallischen Werkstoff, vorzugsweise Stahl, besteht, der unter Zugspannung innerhalb des vorgesehenen Belastungsbereichs nicht dehnbar ist.

## Revendications

1. Système de réglage de la hauteur de coupe pour un groupe de lame coupante pour tondeuse à gazon avec conduite à la main comprenant:
(i) un élément excentrique (8) muni d'une paire de trous (O, A), un premier trou de la paire étant apte pour recevoir un correspondant essieu de roue de la tondeuse et un deuxième trou de la paire étant apte pour recevoir un essieu connecté au châssis de la tondeuse,
(ii) une griffe connecté en rotation avec l'élément excentrique (8),
(iii) un câble (7) connectée à sa première extrémité avec la dite griffe, **caractérisé en ce que** la deuxième extrémité du dit câble (7) est fixée à une transmission mécanique formée par une vis creuse de commande (2b) mue en translation par rapport à une vis sans fin (2a).

2. Système de réglage de la hauteur de coupe selon la revendication 1, dont une poignée (1) est fixée à une extrémité de la dite vis sans fin (2a) pour le contrôle manuel de sa rotation.

3. Système de réglage de la hauteur de coupe selon la revendication 1, dont le dit câble (7) est produit en matériel métallique, de préférence en acier, inextensible à la sollicitation de traction dans le champ des efforts prévus.
